# EUROPEAN PATENT SPECIFICATION

(11) **EP 2 029 261 B1**
(45) Date of publication and mention of the grant of the patent: **26.05.2010**
(21) Application number: 07767125.3
(22) Date of filing: 12.06.2007
(51) Int. Cl.: B01D 53/94, B01J 23/00, B01J 23/63

(54) **CATALYST FOR PURIFICATION OF EXHAUST GAS**
KATALYSATOR ZUR REINIGUNG VON ABGAS
CATALYSEUR POUR LA PURIFICATION DE GAZ D'ÉCHAPPEMENT

(30) Priority: 13.06.2006 JP 2006163610; 27.12.2006 JP 2006351442
(43) Date of publication of application: 04.03.2009
(73) Proprietor: Toyota Jidosha Kabushiki Kaisha, Toyota-shi, Aichi 471-8571 (JP)
(72) Inventor: TANABE, Toshitaka, Aichi-gun, Aichi 4801192 (JP); NAGAI, Yasutaka, Aichi-gun, Aichi 4801192 (JP); HATANAKA, Miho, Aichi-gun, Aichi 4801192 (JP); DOHMAE, Kazuhiko, Aichi-gun, Aichi 4801192 (JP); YAMAMOTO, Toshio, Aichi-gun, Aichi 4801192 (JP); TAKAGI, Nobuyuki, Toyota-shi, Aichi 4718571 (JP); IKEDA, Yasuo, Toyota-shi, Aichi 4718571 (JP)
(74) Representative: Jackson, Martin Peter
(86) International application number: PCT/JP2007/062195
(87) International publication number: WO 2007/145350

(56) References cited:
- EP-A- 1 618 951
- EP-A1- 0 982 066
- EP-A1- 0 993 860
- EP-A1- 1 016 448
- EP-A1- 1 099 466
- EP-A2- 0 754 494
- EP-A2- 1 415 956
- US-A- 5 910 466

## Description

### Technical Field

The present invention relates to a catalyst for purification of exhaust gas, and more specifically to a catalyst for purification of exhaust gas, which has excellent high temperature durability.

### Background Art

Various catalysts for purification of exhaust gas have so far been used to remove toxic components such as HC, CO, and NOₓ in exhaust gas emitted from an internal combustion engine of an automobile and the like. As such a catalyst for purification of exhaust gas, a three-way catalyst is known which simultaneously purifies HC, CO, and NOₓ in exhaust gas resulted from the combustion performed at a theoretical air-fuel ratio. Such a catalyst for purification of exhaust gas generally is constructed of: a substrate (support substrate) which is made of cordierite, metal foil and the like, and which is formed into a shape of a honeycomb; a support (layer for supporting a catalyst) which is made of active alumina powder, and which is formed on the surface of the substrate; and a catalytic component which is made of a noble metal, such as platinum, and which is supported on the support. However, the conventional catalyst for purification of exhaust gas has had a problem that, if it is exposed to high-temperature (particularly 800°C or more) exhaust gas for a long period of time, the particle growth (sintering) of the noble metal occurs, resulting in the reduction in the specific surface, thereby deteriorating the catalytic activity. Accordingly, studies on the various catalysts for purification of exhaust gas have been carried out so that the catalytic activity can be maintained at a high temperature, as well.

For example, in Japanese Unexamined Patent Application Publication No. 2001-129399, disclosed is a catalyst for purification of exhaust gas including: an inorganic oxide support; a platinum composite oxide layer which is composed of an inorganic compound containing a platinum element and alkaline earth metal elements, and which is formed on the inorganic oxide support; and a layer which is composed of the oxide of one or more kinds of elements selected from the group consisting of Mg, Ca, Sr, Ba, La and Ce, which lies between the oxide support and the composite oxide layer. However, in the catalyst for purification of exhaust gas described in Japanese Unexamined Patent Application Publication No. 2001-129399, platinum is not in the metallic state under usual use conditions (use temperature: about 700°C, air-fuel ratio: A/F=about 14.7). As a result, such a catalyst does not necessarily exhibit a sufficient catalytic activity.

EP-A-1,099,466 discloses a catalyst comprising Sr₄PtO₆ and MgAl₂O₄ and a catalyst comprising Ba4PtO6 and BaAl₂O₄.

EP-A-1, 016, 448 discloses in the examples catalysts comprising combinations of composite oxides of platinum and aluminium with alkaline earth metals.

EP-A-1,618,951 discloses a catalyst comprising Rh-CeZrO and Pt-Rh/CePrO and a catalyst comprising RH-CeZrO and CePrO.

EP-A-0,993,860 discloses a catalyst comprising Pt-LaAlO or Pt-BaAlO and Rh-CeZrO.

EP-A-0,982,066 discloses catalysts comprising combinations of composite oxides or rare earth metal with zirconium and alkaline (earth) metals carrying noble metal.

EP-A-1, 415, 956 discloses a catalyst comprising the mixed oxide of cerium and zirconium in two different compositions carrying noble metal.

EP-A-0,754,494 discloses many examples of catalysts comprising combinations of composite oxides of platinum and aluminium with alkaline earth metals and rare earth metals.

US-A-5,910,466 discloses many examples of catalysts comprising combinations of composite oxides of platinum and aluminium with alkaline earth metals.

### Disclosure of the Invention

The present invention has been accomplished taking the above-mentioned problems of the prior art into consideration. It is an object of the present invention to provide a catalyst for purification of exhaust gas, which can exhibit a high catalytic activity under usual use conditions, and which can sufficiently suppress the reduction in the catalytic activity even when exposed to high-temperature exhaust gas for a long period of time.

The present inventors have devoted themselves to keen studies for achieving the above object, and, as a result, found that the catalyst for purification of exhaust gas including a material (A) which can release a noble metal at a high temperature, and a particular material (B) which receives the noble metal released from the material (A) at the high temperature, makes it possible to exhibit the high catalytic activity under usual use conditions as well as to sufficiently suppress the reduction in the catalytic activity even when exposed to high-temperature exhaust gas for a long period of time. Thus, the present inventors came to complete the present invention

Specifically, the catalyst for purification of exhaust gas of the present invention is a catalyst for purification of exhaust gas, comprising: a material (A) which includes: an oxide composite which contains zirconia and/or alumina and an oxide of at least one element selected from the group consisting of alkaline earth metal elements, rare earth elements and group 3A elements; and a noble metal supported on the oxide composite, wherein the material (A) can release the noble metal at a temperature of 600°C or more; and a material (B) which contains a composite oxide which contains zirconia and/or alumina and at least one element selected from the group consisting of magnesium, calcium, barium, lanthanum, cerium, neodymium, praseodymium, yttrium and scandium, wherein the material (B) receives the noble metal released from the material (A) at a temperature of 600°C or more.

In the catalyst for purification of exhaust gas of the present invention, the material (A) preferably releases the noble metal at a ratio of 0.1 to 1.0% by mass per hour relative to the total amount of the noble metal in the material (A) at a temperature of 600°C or more.

Moreover, in the catalyst for purification of exhaust gas of the present invention, the material (A) is preferably a noble metal composite oxide which contains: at least one element selected from the group consisting of zirconium, aluminium, alkaline earth metal elements, rare earth elements and group 3A elements; and a noble metal.

Furthermore, in the catalyst for purification of exhaust gas of the present invention, the value of the bond energy of an oxygen 1s-orbit in the material (B) preferably shows 531 eV or less.

Moreover, in the catalyst for purification of exhaust gas of the present invention, the material (A) preferably releases the noble metal at a ratio of 0.1 to 1.0% by mass per hour relative to the total amount of the noble metal in the material (A) at a temperature of 800 °C or more.

Furthermore, in the catalyst for purification of exhaust gas of the present invention, in a case where the material (A) releases the noble metal at a rate of 0.1 to 1.0% by mass per hour relative to the total amount of the noble metal in the material (A) at a temperature of 800°C or more, the material (A) is preferably a noble metal composite oxide containing: at least one element selected from the group consisting of zirconium, aluminium, alkaline earth metal elements, rare earth elements and group 3A elements; and a noble metal, and
the noble metal is preferably solid-solubilized in the noble metal composite oxide.

Moreover, in the catalyst for purification of exhaust gas of the present invention, the material (A) may be an alloy of the noble metal and a metal other than the noble metal.

Furthermore, in the catalyst for purification of exhaust gas of the present invention, in a case where the material (A) releases the noble metal at a ratio of 0.1 to 1.0% by mass per hour relative to the total amount of the noble metal in the material (A) at a temperature of 800°C or more, the noble metal is preferably supported on at least a part of the material (B).

Note that the reason is not necessarily cleared why the catalyst for purification of exhaust gas of the present invention can exhibit the high catalytic activity under usual use conditions, and which can sufficiently suppress the reduction in catalytic activity even when exposed to high-temperature exhaust gas for a long period of time. However, the present inventors assume the reason as follows. It should be noted that a catalyst for purification of exhaust gas using the material (A) which releases a noble metal at the above described ratio under a temperature condition of 800°C or more will hereinafter be referred to as a hybrid catalyst. A catalyst for purification of exhaust gas using the material (A) which releases a noble metal at the above described ratio under a temperature condition between 600°C or more and less than 800°C will hereinafter be referred to as a mild hybrid catalyst.

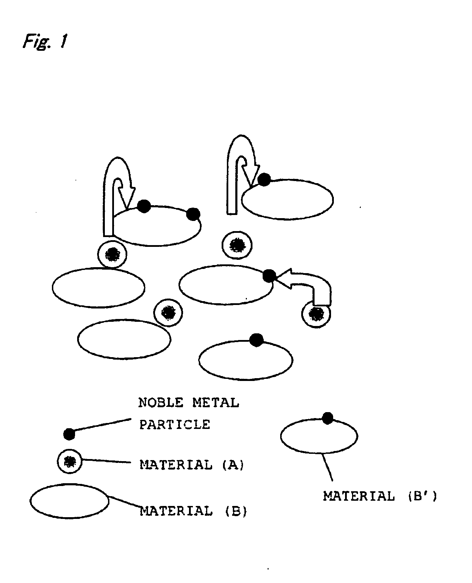

In the present invention, the material (A) can release a noble metal in a high temperature state, and the material (B) receives the noble metal released from the material (A) (Refer to Fig. 1: note that Fig. 1 is a diagrammatic drawing showing the relationships among the material (A), the material (B), and the noble metal in the hybrid catalyst. A material (B') represents the material (B) on which material a part of the noble metal is supported.). Such a material (A) gradually releases the noble metal under high-temperature conditions. The material (A) preferably used as the material for the mild hybrid catalyst is the one (noble metal-supporting oxide composite) including: an oxide composite containing zirconia and/or alumina and an oxide of at least one element selected from the group consisting of alkaline earth metal elements, rare earth elements and group 3A elements; and a noble metal supported on the oxide composite. In such a noble metal-supporting oxide composite, the noble metal is in the supported state, and thereby a relatively weak bonding is formed between the noble metal and the oxide composite. Thus, the noble metal is gradually released under a temperature condition of 600°C or more. On the other hand, as the material (A) which is used as the material for the hybrid catalyst, a noble metal composite oxide in which a noble metal is solid-solubilized can preferably be used. Since the noble metal is incorporated in the noble metal composite oxide, forming a strong bonding therewith, the noble metal composite oxide is stabilized and decomposed at a low rate. As a result, the noble metal composite oxide is gradually decomposed, and at the same time, the noble metal is gradually released, in a high-temperature state of 800°C or more. Moreover, an alloy of a noble metal and a metal other than the noble metal can preferably be used as the material (A) which is used as the material of the hybrid catalyst. When the alloy of a noble metal and a metal other than the noble metal is used as the material (A), the alloy is phase-separated in an oxidation atmosphere at a high temperature of 800°C or more, and thereby the noble metal is gradually released. It is estimated that the noble metal is released in an atomic state when the material (A) releases the noble metal.

The material (B) contains a composite oxide (preferably a composite oxide which shows the value of the a bond energy of an oxygen 1s-orbit of 531 eV or less, and which has a high electron density of the oxygen) of zirconia and/or alumina and at least one element selected from the group consisting of alkaline earth metal elements, rare earth elements and group 3A elements, and exhibits an extremely strong interaction with the noble metal. Accordingly, the noble metal which is supported on the material (B) and the material (B) strongly interact with each other at the interface thereof. In addition, the noble metal released from the material (A) under high-temperature (preferably at 600°C or more) and oxidation conditions forms a surface oxide layer on the surface of the material (B) when supported on the material (B), and is dispersed and supported while gradually spreading over the surface of the material (B). As a result, in the present invention, the noble metal released from the material (A) is supported in a highly spread state on the surface of the material (B). Therefore, in the present invention, the reduction in catalytic activity is sufficiently suppressed even when the catalyst is exposed to high-temperature exhaust gas for a long period of time, resulting in the exhibition of high durability. Furthermore, the noble metal formed on the surface of the material (B) in the form of the surface oxide layer can be reduced by reducing gas contained in exhaust gas to thereby be returned to a metallic state. Therefore, it is estimated that, in the present invention, a high catalytic activity can be exhibited in usual use conditions (use temperature: about 700°C, air-fuel ratio: A/F=about 14.7).

According to the present invention, it becomes possible to provide a catalyst for purification of exhaust gas, which can exhibit a high catalytic activity in usual use conditions, and which sufficiently suppress the reduction in catalytic activity even when exposed to high-temperature exhaust gas for a long period of time.

### Brief Description of the Drawings

Fig. 1 is a diagrammatic drawing showing the relationships among a material (A), a material (B), and a noble metal under a high temperature condition of 800°C or more.

### Best Mode for Carrying Out the Invention

The present invention will be described below in detail in line with preferred embodiments.

The catalyst for purification of exhaust gas of the present invention includes: a material (A) which can release a noble metal at a high temperature; and a material (B) which contains a composite oxide of zirconia and/or alumina and at least one element selected from the group consisting of alkaline earth metal elements, rare earth elements and group 3A elements, and which receives the noble metal released from the material (A) at the high temperature.

The material (A) related to the present invention is only necessary to be a material which can release a noble metal at a high temperature, and not particularly limited. However, a material which releases the noble metal at a rate of 0.1 to 1.0% by mass (more preferably 0.2 to 0.7% by mass) per hour relative to the total amount of the noble metal in the material (A) at 600°C or more (preferably 800°C or more) is preferable as the material (A). Less than the lower limit of such a noble metal releasing rate hardly allows a noble metal to be released under a temperature condition of 600°C or more (preferably 800°C or more). Accordingly, the catalytic activity tends not to be able to be sufficiently maintained. In contrast, more than the upper limit permits a noble metal to rapidly be released under a temperature condition of 600°C or more (preferably 800°C or more). Accordingly, the effect of maintaining the catalytic activity is reduced at an early stage. As a result, it tends to be difficult to sufficiently suppress the reduction in the catalytic activity over a long period of time. Note that "high temperature" quoted in the present invention is referred to a temperature at which the conventional catalyst for purification of exhaust gas is deteriorated by heat (for example, a temperature of 800°C or more).

The noble metal contained in the material(A) includes platinum (Pt), rhodium (Rh), palladium (Pd), osmium (Os), iridium (Ir), gold (Au) and the like. Platinum, rhodium, and palladium are preferable from a viewpoint that the catalyst for purification of exhaust gas to be obtained exhibits a higher catalytic activity.

The material (A) is a noble metal composite oxide containing: at least one element selected from the group consisting of zirconium, aluminium, alkaline earth metal elements, rare earth elements and group 3A elements; and the noble metal. Such an alkaline earth metal element includes magnesium (Mg), calcium (Ca), strontium (Sr), barium (Ba) and radium (Ra). Such a rare earth element and group 3A element includes scandium (Sc), yttrium (Y), lanthanum (La), cerium (Ce), praseodymium (Pr), neodymium (Nd), samarium (Sm), terbium (Tb), dysprosium (Dy), ytterbium (Yb), lutetium (Lu) and the like. Such a material (A) includes composite oxides and the like represented by, for example, chemical formulae: BaₓZr_{y}Pt_{z}O₃₊ₐ and MgₓAl_{y}Pt_{z}O₄₊ₐ (where x, y, z and a in the formulae represent any numeric value).

In addition, in such a noble metal composite oxide, at least one element selected from the group consisting of zirconium, aluminium, alkaline earth metal elements, rare earth elements and group 3A elements, and a noble metal do not simply coexist, but preferably form a composite oxide from a viewpoint that the noble metal is released at a more suitable releasing rate under a high temperature condition of 800°C or more. When at least one element selected from the group consisting of zirconium, aluminium, alkaline earth metal elements, rare earth elements and group 3A elements, and a noble metal simply coexist, it tends to be difficult to gradually release the noble metal at a suitable releasing rate.

Furthermore, as such a noble metal composite oxide, the noble metal is preferably solid-solubilized in the noble metal composite oxide from a viewpoint that the noble mental can be released at a more suitable releasing rate under a high temperature condition of 800°C or more, and thereby the reduction in the catalytic activity is more sufficiently suppressed. Incidentally, it is estimated that the noble metal is gradually released from the material (A) at a more suitable releasing rate under a high temperature condition of 800°C or more because such a noble metal is solid-solubilized in the noble metal composite oxide, and thereby the noble metal is incorporated in the composite oxide to form a strong bonding, resulting in the reduction in the decomposition rate. Therefore, the material (A) in which the noble metal is solid-solubilized in the noble metal composite oxide can preferably be used as the material for the aforementioned hybrid catalyst.

The noble metal composite oxide used as the material (A) for the hybrid catalyst is preferably calcined at a high calcining temperature (more preferably 800°C or more, further preferably 950°C or more) in forming the composite oxide during the production. The noble metal composite oxide calcined at a high temperature in the above manner tends to be in a state where the part or all of the noble metal is solid-solubilized therein.

Moreover, the noble metal composite oxide used as the material for the mild hybrid catalyst is preferably calcined at a relatively low calcining temperature (more preferably 250°C to 700°C, further preferably 400°C to 600°C) in forming the composite oxide during the production. In the noble metal composite oxide calcined at a relative low calcining temperature in the above manner, the noble metal is not solid-solubilized, and accordingly tends to be able to gradually be released under a temperature condition of 600°C or more at a more suitable releasing rate.

In addition, such a noble metal composite oxide preferably contains a composite oxide of zirconia and/or alumina. In this case, the ratio of zirconia and/or alumina is preferably about 10 to 95 % by mass. When the ratio of zirconia and/or alumina in the composite oxide is less than the lower limit, the specific surface is small. As a result, it tends to be difficult to release the contained noble metal. In contrast, when the ratio of zirconia and/or alumina in the composite oxide exceeds the upper limit, it tends to be difficult to stably form the composite oxide with the noble metal.

The content of the noble metal in such a noble metal composite oxide is preferably 0.1 to 10% by mass relative to the total amount of the material (A), more preferably 0.5 to 5% by mass. When the content of the noble metal is less than the lower limit, the amount of the noble metal to be contained is too small. In this case, it tends to be difficult to suppress the reduction in catalytic activity over a long period of time. On the other hand, when the content of the noble metal exceeds the upper limit, particle growth (sintering) tends to occur due to aggregation among the particles of a noble metal. As a result, the noble metal composite oxide tends to be unstable.

A method of producing such a noble metal composite oxide is not particular limited. For example, the following methods can be employed. Specifically, in the method which can be employed, an aqueous solution containing a noble metal salt (for example, dinitrodiamine salt) and a noble metal complex (for example, tetra ammine complex) which serves as a raw material for the above described noble metal composite oxide, a salt of the other metal (for example, nitrate), and a surfactant (for example, nonionic surfactant) to be added as necessary is used, and the coprecipitate of the composite oxide is formed in the presence of ammonia. The obtained coprecipitate is filtered and washed, and thereafter dried, and then calcined. As the calcining method employed in the above method, a method in which the noble metal and other metal are calcined under a temperature condition of 800°C or more (further preferably 950°C or more) for about 1 to 10 hours is preferably employed from a viewpoint that the noble metal and other metal are more sufficiently formed into a composite oxide when the composite oxide is used as the material for the hybrid catalyst. When the composite oxide is used as the material for the mild hybrid catalyst, a method in which the noble metal and other metal are calcined under a temperature condition of 250°C to 700°C (further preferably, 400°C to 600°C) for about 1 to 10 hours is preferably employed.

As the material (A) which can preferably be used as the hybrid catalyst, an alloy of the noble metal and a metal other than the noble metal can also preferably used. It is estimated that the effect of gradually releasing the noble metal is obtained because the alloy is used as the material (A) in the above manner, and thereby the alloy is phase-separated in a high temperature oxidation atmosphere. The kind of the metal other than the noble metal is not particularly limited, and includes, for example, transition metals and alkaline earth metal elements. Note that a method for producing such an alloy is not particularly limited, and a known method can suitably be employed.

As the material (A), the one (noble metal-supporting oxide composite) which includes: an oxide composite containing zirconia and/or alumina, and an oxide of at least one element selected from the group consisting of alkaline earth metal elements, rare earth elements and group 3A elements; and a noble metal supported on the oxide composite is used from a viewpoint that the noble metal can be released at a preferred releasing rate under a temperature condition of 600°C or more, and that the reduction in catalytic activity can be more sufficiently suppressed. In such a noble metal-supporting oxide composite, the noble metal forms a relatively weak bonding with the oxide composite. Accordingly, the noble metal can gradually be released at a more preferred releasing rate under a temperature condition of 600°C or more. As a result, such a noble metal-supporting oxide composite can preferably be used for the above described mild hybrid catalyst.

Furthermore, the noble metal-supporting oxide composite is preferably calcined at a relative low calcining temperature (more preferably, 250°C to 700°C, further preferably, 400°C to 600°C) during the production when the noble metal-supporting oxide composite is used as the material (A) for the mild hybrid catalyst. When the calcination is carried out in such a calcining condition, the noble metal tends not to be solid-solubilized in the oxide composite, and thereby the noble metal can be released at a more preferred releasing rate under a temperature condition of 600°C or more.

The noble metal-supporting oxide composite which has been produced by calcination under a temperature condition of 800°C or more (further preferably, 950°C or more) is preferably used when the noble metal-supporting oxide composite is used as the material (A) for the hybrid catalyst. When the calcination is carried out at the calcining temperature, at least the part of the supported noble metal tends to be solid-solubilized in an oxide composite, and thereby the noble metal can be released at a more preferred releasing rate under a temperature condition of 800°C or more.

In such an oxide composite, the ratio of zirconia and/or alumina is preferably about 10 to 95% by mass. When the ratio of zirconia and/or alumina in the oxide composite is less than the lower limit, the specific surface thereof is small. It thereby tends to be difficult to release the noble metal under a temperature condition between 600°C or more and less than 800°C. On the other hand, when the ratio of zirconia and/or alumina exceeds the upper limit, the noble metal is solid-solubilized in the composite oxide. It thereby tends to be difficult to release the noble metal at a rate of 0.1 to 1.0% by mass per hour relative to the total amount of the noble metal in the material (A) under a temperature condition between 600°C or more and less than 800°C.

Furthermore, the amount of the noble metal supported on such an oxide composite is preferably 0.1 to 10% by mass relative to the total amount of the material (A), further preferably 0.5 to 5% by mass. When the supported amount of the noble metal is less than the lower limit, the amount of the noble metal is too small. It thereby tends to be difficult to suppress the reduction in catalytic activity over a long period of time. In contrast, when the supported amount of the noble metal exceeds the upper limit, particle growth (sintering) tends to occur due to aggregation among the particles of the noble metal. As a result, the obtained material (A) tends to be unstable.

A method of producing the oxide composite is not particular limited. For example, the following method can be employed. Specifically, in the method which can be employed, an aqueous solution containing the salt of zirconium and/or aluminium, the salt (for example, nitrate) of other metal of alkaline earth metal elements, rare earth elements and group 3A elements, and a surfactant (for example, nonionic surfactant) to be added as necessary is used, and the coprecipitate of the oxide composite is formed in the presence of ammonia. The obtained coprecipitate is filtered and washed, and thereafter dried and then calcined. Moreover, a method of supporting the noble metal on such an oxide composite is not particular limited, and a known method can suitably be employed. For example, a method is preferably employed in which calcination is performed for about 1 to 10 hours under a temperature condition of 250°C to 700°C (further preferably 400°C to 600'C) when the solution of the noble metal salt (for example, dinitrodiamine salt) is impregnated and supported on the oxide composite to use the obtained noble metal-supporting oxide composite as the material for the mild hybrid catalyst, or of 800°C or more (further preferably 950°C or more) when the obtained noble metal-supporting oxide composite is used as the material for the hybrid catalyst.

In addition, the form of such a material (A) is not particularly limited, but is preferably in a powder form from a viewpoint that the material (A) is preferably used as a catalyst by being coated on a monolith substrate or the like. The specific surface of such a material (A) is not particularly limited, but is preferably 1 m²/g or more. Such a specific surface can be calculated as a BET specific surface from an adsorption isotherm using a BET isothermal adsorption equation.

When the material (A) is in a powder form, the particle diameter of the material (A) is not particularly limited, but is preferably 20 nm or more. When the particle diameter of the material (A) is less than the lower limit, a large amount of cost is necessary to pulverize the material (A). At the same time, it tends to be difficult to gradually release the noble metal.

The material (B) related to the present invention is the material which contains a composite oxide of zirconia and/or alumina and at least one element selected from the group consisting of alkaline earth metal elements, rare earth elements and group 3A elements, and which receives the noble metal released from the material (A) at the high temperature.

Such a material (B) contains the composite oxide of zirconia and/or alumina and at least one element selected from the group consisting of magnesium, calcium, barium, lanthanum, cerium, neodymium, praseodymium, yttrium and scandium, wherein the material (B) receives the noble metal released from the material (A) at a temperature of 600°C or more. Such a material (B) exhibits an extremely strong interaction with the noble metal, and accordingly can receive the noble metal released from the material (A) under a high temperature condition.

Of these, Mg, Ca and Ba are preferable from a viewpoint that interaction with the noble metal and the noble metal oxide tends to be strong, and thereby strong affinity therewith is exhibited. Of these, La and Ce are preferable from.a viewpoint that interaction with the noble metal and the noble metal oxide tends to be strong, and thereby strong affinity therewith is exhibited.

In a state where zirconia and/or alumina and at least one element selected from magnesium, calcium, barium, lanthanum, cerium, neodymium, praseodymium, yttrium and scandium, simply coexists (for example, in a state where zirconia particle and/or alumina particle and particles of at least one oxide selected from the group consisting of magnesium, calcium, barium, lanthanum, cerium, neodymium, praseodymium, yttrium and scandium, are uniformly dispersed), the noble metal is not sufficiently dispersed on the surface of the material (B), and thus it is difficult to exhibit a high catalytic activity, and at the same time, resulting in difficulty to sufficiently suppress the reduction in catalytic activity.

In the material (B), the ratio (composition ratio) of zirconia and/or alumina relative to at least one element selected from the group consisting of magnesium, calcium, barium, lanthanum, cerium, neodymium, praseodymium, yttrium and scandium, which form the composite oxide, is not particularly limited, but the ratio of zirconia and/or alumina in the composite oxide is preferably 10 to 95% by mass, more preferably 30 to 90% by mass. When the ratio of zirconia and/or alumina in the composite oxide exceeds the above range, it tends to be difficult to disperse the noble metal as a fine particle on the surface of the material (B). Accordingly, it tends to be difficult for the material (B) to support the noble metal in a highly dispersed state.

In addition, a composite oxide used as such a material (B) preferably exhibits the value of the bond energy of an oxygen 1s orbit of 531 eV or less, particularly preferably 531 to 529 eV. When a composite oxide having the bond energy of more than 531 eV is used, the interaction between the noble metal and the material (B) tends not to sufficiently be strong, thus the noble metal is not supported thereon in a sufficiently dispersed state. In contrast, when a composite oxide having the bond energy value of less than 529 eV is used, the interaction between the noble metal and the material (B) tends to be too strong, and thus it is difficult for the noble metal to return to an active state.

The composite oxide which satisfies the above conditions includes, for example, the followings.
CeO₂-ZrO₂-Y₂O₃: 530.04 eV
ZrO₂-La₂O₃: 530.64 eV
CeO₂-ZrO₂: 530 eV
CeO₂-ZrO₂-La₂O₃-Pr₂O₃: 529.79 eV

The material (B) related to the present invention is only necessary to contain the above described composite oxide. As other components, alumina, zeolite, zirconia and the like may further be contained. In this case, the ratio of the composite oxide in the material (B) related to the present invention is preferably 50 wt% or more.

In addition, such a material (B) may have the noble metal supported on at least the part thereof when used for the above described hybrid catalyst. In the above manner, the noble metal is supported on the part of the material (B), and thereby a catalytic activity can be exhibited at an early stage.

Furthermore, the form of the material (B) is not particularly limited, but a powder form is preferable because the specific surface is increased, and thereby a high catalytic activity is obtained. The specific surface of such a material (B) is not particularly limited, but is preferably 1m²/g or more. Such a specific surface can be calculated as a BET specific surface from an adsorption isotherm using a BET isothermal adsorption equation.

When the material (B) is in a powder form, the particle diameter of the material (B) is not particularly limited, but the secondary particle diameter is preferably 0.1 to 20 µm. When the particle diameter is less than the lower limit, a large amount of cost is necessary to pulverize the material (B). At the same time, the material (B) tends to be difficult to handle. On the other hand, when the particle diameter exceeds the upper limit, it tends to be difficult to stably form a coat layer of the catalyst for purification of exhaust gas of the present invention on the substrate described below.

Note that a method of producing the material (B) related to the present invention is not particularly limited, and the material (B) can be obtained by, for example, the following method. Specifically, the material (B) made of the composite oxide can be obtained by forming a coprecipitate of the composite oxide in the presence of ammonia from a aqueous solution containing the salt (for example, nitrate) of various metals which serve as the raw material of the composite oxide, and further a surfactant (for example, nonionic surfactant) as necessary, and by filtering, washing, drying, and further calcining the obtained coprecipitate.

The catalyst for purification of exhaust gas of the present invention includes the material (A) and the material (B). The containing ratio between the material (A) and the material (B) in such a catalyst for purification of exhaust gas is preferably within a range of 5:95 to 95:5 by mass (material (A) :material (B)). A method of producing such a catalyst for purification of exhaust gas is not particularly limited, and the catalyst for purification of exhaust gas can be obtained by, for example, mixing the material (A) and material (B) which are obtained in the manner described above. The catalyst for purification of exhaust gas obtained in the above manner can be used as a mild hybrid catalyst or hybrid catalyst in accordance with use conditions by suitably selecting the preferred material (A) and material (B) on the basis of the usage thereof.

The shape of the catalyst for purification of exhaust gas related to the present invention is not particularly limited, and can be in a shape such as a honeycomb shape of a monolith catalyst, a pellet shape of a pellet catalyst and the like. The substrate used here is not particularly limited, and suitably selected in accordance with the usage and the like of the obtained catalyst. A DPF substrate, a monolith-like substrate, a pellet-like substrate, a plate-like substrate and the like are preferably employed. The material of these substrates is also not particularly limited, and a substrate made of a ceramic such as cordierite, silicon carbide, mullite and the like, and a substrate made of a metal such as stainless steel containing chromium and aluminium are preferably employed. Furthermore, a method of producing such a catalyst is not particularly limited. For example, when a monolith catalyst is produced, a method can be employed in which the material (A) and material (B) are supported on a honeycomb-like substrate formed of cordierite or a metal foil.

The catalyst for purification of exhaust gas of the present invention can exhibit a high catalytic activity under usual use conditions, and can sufficiently suppress the reduction in catalytic activity even when exposed to high-temperature exhaust gas for a long period of time. Therefore, the catalyst for purification of exhaust gas of the present invention is particularly useful as a catalyst for removing toxic components such as HC, CO and NOₓ in exhaust gas emitted from an automobile engine.

### [Examples]

The present invention will hereinafter more specifically be described based on Examples and Comparative examples. However, the present invention is not limited to the following Examples.

### (Example 1)

Firstly, 200 g of an aqueous solution was prepared, containing 16 g of an aqueous solution of zirconium oxynitrate (containing 2 mmol/g of Zr), 24 g of an aqueous solution of lanthanum nitrate (containing 2 mmol/g of La), 2.94 g of an aqueous solution of platinum dinitrodiammine (containing 4% by mass of Pt), and 1 g of a nonionic surfactant (Trade name: "LEOCON" available from Lion Corporation) . Subsequently, 17 g of ammonia water having a concentration of 25% by mass was added to the aqueous solution. This mixture was stirred at room temperature for 10 minutes to obtain a coprecipitate. Thereafter, the obtained coprecipitate was filtered, washed, and dried at 110°C. Then, the coprecipitate was further calcined under a temperature condition of 1000°C in the atmosphere for 5 hours, and thereby a platinum containing lanthanum-zirconium composite oxide (Pt-containing La-Zr composite oxide: material (A)) was obtained. The molar ratio (La:Zr) between La and Zr was 6:4 in the obtained Pt-containing La-Zr composite oxide. The content of Pt was 1% by mass.

Next, 200 g of an aqueous solution was prepared, containing 24.18 g of an aqueous solution of cerium nitrate (containing 28% by mass of CeO₂), 17.95 g of an aqueous solution of zirconium oxynitrate (containing 18% by mass of Zr), and 1 g of a nonionic surfactant (Trade name: "LEOCON" available from Lion Corporation). Subsequently, 13.91 g of ammonia water having a concentration of 25% by mass was added to the aqueous solution. This mixture was then stirred at room temperature for 10 minutes, and thereby a coprecipitate was obtained. Thereafter, the obtained coprecipitate was filtered, washed, and dried at 110°C. Then, the coprecipitate was further calcined under a temperature condition of 700°C in the atmosphere for 5 hours, and thereby a cerium-zirconium composite oxide (Ce-Zr composite oxide: material (B)) was obtained. The molar ratio (Ce:Zr) between Ce and Zr was 6:4 in the obtained Ce-Zr composite oxide.

Then, the Pt-containing La-Zr composite oxide (material (A)) and the Ce-Zr composite oxide (material (B)) obtained in the manner described above were mixed such that the mass ratio thereof was 1:1, and thereby the catalyst for purification of exhaust gas of the present invention was obtained.

### (Example 2)

In producing the material (A), the catalyst for purification of exhaust gas of the present invention was obtained in the same manner as in Example 1 with the exception that the used amount of an aqueous solution of platinum dinitrodiammine (containing 4% by mass of Pt) was changed from 2.94 g to 2.82 g, and that 24 g of an aqueous solution of barium nitrate (containing 2 mmol/g of Ba) was used in place of an aqueous solution of lanthanum nitrate. The material (A) obtained in Example 2 was Pt-containing Ba-Zr composite oxide. The molar ratio (Ba:Zr) between Ba and Zr was 6:4 in the Pt-containing Ba-Zr composite oxide. The content of Pt was 1% by mass.

### (Comparative example 1)

Using the Ce-Zr composite oxide (material (B)) produced in Example 1, an aqueous solution of platinum dinitrodiammine (containing 4% by mass of Pt) was impregnated and supported such that the supported amount of Pt was 0.58 by mass on the Ce-Zr composite oxide, and thereby a catalyst for purification of exhaust gas for comparison was obtained.

### (Comparative example 2)

The Pt-containing Ba-Zr composite oxide (material (A)) produced in Example 2 was directly used as a catalyst for purification of exhaust gas for comparison.

### <Evaluation of characteristics of catalysts for purification of exhaust gas obtained in Examples 1 and 2, and in Comparative examples 1 and 2>

### (Durability test 1)

While a model gas was circulated, heat treatment was performed on each catalyst under a temperature condition of 1050°C for 5 hours (Durability test 1) . Note that the model gas circulation condition was that in which a rich gas containing 3% by volume of CO in nitrogen gas and a lean gas containing 20% by volume of O₂ in nitrogen gas were alternately supplied every 5 minutes.

### (Catalytic activity evaluation test 1)

1 g of the catalysts for purification of exhaust gas, which were obtained in Examples 1 and 2 and Comparative example 1 after the durability test, and 0.5 g of the catalyst for purification of exhaust gas, which was obtained in Comparative example 2 after the durability test were used to equalize the mass of Pt in each catalyst to be tested. A stoichiometric model gas shown Table 1 was then flowed at a rate of 7 L/minute to each catalyst. The temperature of the catalyst was increased to 100°C to 500°c at a temperature increasing rate of 10 °C/minute. Thereafter, the concentrations of HC, CO, and NOₓ in the emission gas from the catalyst were measured, and a temperature at which the purification rate of each component reached 50% (50% purification temperature) was measured. Table 2 shows the HC 50% purification temperature of each catalyst.

**[Table 1]**

| Composition of gas | |
|---|---|
| C₃H₆ | 1600 ppm-carbon |
| CO | 0.70% by volume |
| H₂ | 0.23% by volume |
| NO | 1200 ppm |
| O₂ | 0.65% by volume |
| CO₂ | 10% by volume |
| H₂O | 3% by volume |

**[Table 2]**

| | HC 50% purification temperature (Unit: °C) |
|---|---|
| Example 1 | 243 |
| Example 2 | 230 |
| Comparative example 1 | 283 |
| Comparative example 2 | 320 |

As apparent from the results shown in Table 2, it was found that the catalyst for purification of exhaust gas of the present invention exhibited a high catalytic activity even after the durability test. Therefore, it was found that the catalyst for purification of exhaust gas of the present invention could maintain the high catalytic activity over a long period of time, and could sufficiently exhibit the high catalytic activity under usual use conditions.

### (Example 3)

Firstly, 200 g of an aqueous solution containing 24.18 g of an aqueous solution of cerium nitrate (containing 28% by mass of CeO₂), 17.95 g of an aqueous solution of zirconium oxynitrate (containing 18% by mass of Zr), and 1g of a nonionic surfactant (Trade name: "LEOCON" available from Lion Corporation) was prepared. Subsequently, 13.9.1 g of ammonia water having a concentration of 25% by mass was added to the aqueous solution. This mixture was then stirred at room temperature for 10 minutes, and thereby obtaining a coprecipitate. Thereafter, the obtained coprecipitate was filtered, washed, and dried at 110°C. Then, the coprecipitate was further calcined under a temperature condition of 700°C in the atmosphere for 5 hours, and thereby a cerium-zirconium oxide composite was obtained. Subsequently, an aqueous solution of platinum dinitrodiammine (containing 4% by mass of Pt) was impregnated to the Ce-Zr oxide composite such that the supported amount of platinum was 1% by mass, and the oxide composite was dried at 110°C, then calcined under a temperature condition of 500°C in the atmosphere for 3 hours, and thereby a Pt-supporting Ce-Zr oxide composite (material (A)) was obtained. The molar ratio between Ce and Zr (Ce:Zr) in the obtained Pt-supporting Ce-Zr oxide composite was 6:4. The supported amount of Pt was 1% by mass.

Next, 200 q of an aqueous solution containing 24.18 g of an aqueous solution of cerium nitrate (containing 28% by mass of CeO₂), 17.95 g of an aqueous solution of zirconium oxynitrate (containing 18% by mass of Zr), and 1 g of a nonionic surfactant (Trade name: "LEOCON" available from Lion Corporation) was prepared. Subsequently, 13.91 g of ammonia water having a concentration of 25% by mass was added to the aqueous solution. This mixture was then stirred at room temperature for 10 minutes, and thereby a coprecipitate was obtained. Thereafter, the obtained coprecipitate was filtered, washed, and dried at 110°C. Then, the coprecipitate was further calcined under a temperature condition of 700°C in the atmosphere for 5 hours, and thereby a cerium-zirconium composite oxide (material (B)) was obtained.

Subsequently, the Pt-supporting Ce-Zr oxide composite (material (A)) and cerium-zirconium composite oxide (material (B)) were mixed such that the mass ratio was 1:1, and thereby the catalyst for purification of exhaust gas of the present invention was obtained.

### (Comparative example 3)

Using the cerium-zirconium composite oxide (material (B)) produced in Example 1, an aqueous solution of platinum dinitrodiammine (containing 4% by mass of Pt) was impregnated in and supported on the cerium-zirconium composite oxide such that the supported amount of platinum was 0.5% by mass, and thereby a catalyst for purification of exhaust gas for comparison was obtained.

### <Evaluation of characteristics of catalysts for purification of exhaust gas obtained in Example 3 and Comparative example 3>

### (Durability test 2)

While a model gas was circulated, heat treatment was performed on each catalyst under a temperature condition of 950°C for 5 hours (Durability test 2). Note that a model gas circulation condition was that in which a rich gas containing 3% by volume of CO in nitrogen gas and a lean gas containing 20% by volume of O₂ in nitrogen gas were alternately supplied every 5 minutes.

### (Catalytic activity evaluation test 2)

The concentrations of HC, CO, and NOₓ in the emission gas from the catalyst were measured employing the same method as that used in the above described catalytic activity evaluation test 1 with the exception that the catalysts for purification of exhaust gas, which were obtained in Example 3 and Comparative example 3 after Durability test 2 were used. At this time, a temperature at which the purification rate of each component reached 50% (50% purification temperature) was measured. Table 3 shows the HC 50% purification temperature of each catalyst.

**[Table 3]**

| | HC 50% purification temperature (Unit: °C) |
|---|---|
| Example 3 | 237 |
| Comparative example 3 | 263 |

As apparent from the results shown in Table 3, it was found that the catalyst for purification of exhaust gas of the present invention exhibited a high catalytic activity even after a durability test. Therefore, it was found that the catalyst for purification of exhaust gas of the present invention could maintain the high catalytic activity over a long period of time, and could sufficiently exhibit the high catalytic activity under usual use conditions.

### Industrial Applicability

As described above, according to the present invention, it becomes possible to provide a catalyst for purification of exhaust gas, which can exhibits a high catalytic activity under usual use conditions, and which can sufficiently suppress the reduction in catalytic activity even when it is exposed to high-temperature exhaust gas for a long period of time.

Therefore, the catalyst for purification of exhaust gas of the present invention is particularly useful as a catalyst for removing toxic components such as HC, CO, and NOₓ in exhaust gas emitted from an automobile engine because it can exhibit a high catalytic activity over a long period of time.

## Claims

1. A catalyst for purification of exhaust gas, comprising:
a material (A) which includes: an oxide composite which contains zirconia and/or alumina and an oxide of at least one element selected from the group consisting of alkaline earth metal elements, rare earth elements and group 3A elements; and a noble metal supported on the oxide composite, wherein the material (A) can release the noble metal at a temperature of 600°C or more; and
a material (B) which contains a composite oxide which contains zirconia and/or alumina and at least one element selected from the group consisting of magnesium, calcium, barium, lanthanum, cerium, neodymium, praseodymium, yttrium and scandium, wherein the material (B) receives the noble metal released from the material (A) at a temperature of 600°C or more.

2. The catalyst for purification of exhaust gas according to claim 1, wherein the material (A) releases the noble metal at a rate of 0.1 to 1.0% by mass per hour relative to the total amount of the noble metal in the material (A) at a temperature of 600°C or more.

3. The catalyst for purification of exhaust gas according to claim 1, wherein the material (A) is a noble metal composite oxide which contains: at least one element selected from the group consisting of zirconium, aluminium, alkaline earth metal elements, rare earth elements and group 3A elements; and the noble metal.

4. The catalyst for purification of exhaust gas according to claim 1, wherein the value of the bond energy of an oxygen 1s-orbit in the material (B) shows 531 eV or less.

5. The catalyst for purification of exhaust gas according to claim 1, wherein the material (A) releases the noble metal at a rate of 0.1 to 1.0% by mass per hour relative to the total amount of the noble metal in the material (A) at a temperature of 800°C or more.

6. The catalyst for purification of exhaust gas according to claim 5, wherein the material (A) is a noble metal composite oxide which contains: at least one element selected from the group consisting of zirconium, aluminium, alkaline earth metal elements, rare earth elements and group 3A elements; and the noble metal, wherein
the noble metal is solid-solubilized in the noble metal composite oxide.

7. The catalyst for purification of exhaust gas according to claim 5, wherein the material (A) is an alloy of the noble metal and a metal other than the noble metal.

8. The catalyst for purification of exhaust gas according to claim 5, wherein the noble metal is supported on at least a part of the material (B).

## Patentansprüche

1. Katalysator zur Reinigung von Abgas, der umfasst:
ein Material (A), welches beinhaltet: ein Oxid-Komposit, welches Zirkonoxid und/oder Aluminiumoxid und ein Oxid zumindest eines Elements ausgewählt aus der Gruppe bestehend aus Erdalkalimetallelementen, Seltenerdelementen und Gruppe-3A Elementen enthält; und ein Edelmetall, das auf dem Oxid-Komposit geträgert ist, wobei das Material (A) das Edelmetall bei einer Temperatur von 600°C oder mehr freisetzen kann; und
ein Material (B), welches ein Komposit-Oxid enthält, welches Zirkonoxid und/oder Aluminiumoxid und zumindest ein Element ausgewählt aus der Gruppe bestehend aus Magnesium, Calcium, Barium, Lanthan, Cer, Neodym, Praseodym, Yttrium und Scandium enthält, wobei das Material (B) das von dem Material (A) bei einer Temperatur von 600°C oder mehr freigesetzte Edelmetall aufnimmt.

2. Katalysator zur Reinigung von Abgas nach Anspruch 1, wobei das Material (A) das Edelmetall bei einer Temperatur von 600°C oder mehr mit einer Geschwindigkeit von 0,1 bis 1,0 Masse-% pro Stunde bezogen auf die Gesamtmenge des Edelmetalls in dem Material (A) freisetzt.

3. Katalysator zur Reinigung von Abgas nach Anspruch 1, wobei das Material (A) ein Edelmetall-Komposit-Oxid ist, welches enthält: zumindest ein Element ausgewählt aus der Gruppe bestehend aus Zirkon, Aluminium, Erdalkalimetallelementen, Seltenerdelementen und Gruppe-3A Elementen; und das Edelmetall.

4. Katalysator zur Reinigung von Abgas nach Anspruch 1, wobei der Wert der Bindungsenergie eines Sauerstoff 1s-Orbitals in dem Material (B) 531 eV oder weniger zeigt.

5. Katalysator zur Reinigung von Abgas nach Anspruch 1, wobei das Material (A) das Edelmetall bei einer Temperatur von 800°C oder mehr mit einer Geschwindigkeit von 0,1 bis 1,0 Masse-% pro Stunde bezogen auf die Gesamtmenge des Edelmetalls in dem Material (A) freisetzt.

6. Katalysator zur Reinigung von Abgas nach Anspruch 5, wobei das Material (A) ein Edelmetall-Komposit-Oxid ist, welches enthält: zumindest ein Element ausgewählt aus der Gruppe bestehend aus Zirkon, Aluminium, Erdalkalimetallelementen, Seltenerdelementen und Gruppe-3A Elementen; und das Edelmetall, wobei
das Edelmetall in dem Edelmetall-Komposit-Oxid Festphasen-gelöst ist.

7. Katalysator zur Reinigung von Abgas nach Anspruch 5, wobei das Material (A) eine Legierung des Edelmetalls und eines anderen Metalls als das Edelmetall ist.

8. Katalysator zur Reinigung von Abgas nach Anspruch 5, wobei das Edelmetall auf zumindest einem Teil des Materials (B) geträgert ist.

## Revendications

1. Catalyseur pour la purification de gaz d'échappement, comprenant:
un matériau (A) qui comporte: un composé d'oxyde qui contient de la zircone et/ou alumine et un oxyde d'au moins un élément sélectionné du groupe constitué d'éléments de métal alcalino-terreux, lanthanides et des éléments du groupe 3A; et un métal noble supporté sur le composé d'oxyde, dans lequel le matériau (A) peut libérer le métal noble à une température de 600°C ou plus; et
un matériau (B) qui contient un oxyde composé qui contient de la zircone et/ou alumine et au moins un élément sélectionné du groupe constitué de magnésium, calcium, baryum, lanthane, cérium, néodyme, praséodyme, yttrium et scandium, dans lequel le matériau (B) reçoit le métal noble libéré du matériau (A) à une température de 600°C ou plus.

2. Catalyseur pour la purification de gaz d'échappement selon la revendication 1, dans lequel le matériau (A) libère le métal noble à une vitesse de 0,1 à 1,0 % en masse par heure par rapport à la quantité totale du métal noble présent dans le matériau (A) à une température de 600°C ou plus.

3. Catalyseur pour la purification de gaz d'échappement selon la revendication 1, dans lequel le matériau (A) est un oxyde composé de métal noble qui contient: au moins un élément sélectionné du groupe constitué de zircone, aluminium, éléments de métal alcalino-terreux, lanthanides et des éléments du groupe 3A; et du métal noble.

4. Catalyseur pour la purification de gaz d'échappement selon la revendication 1, dans lequel la valeur de l'énergie de liaison d'une première orbite de l'oxygène dans le matériau (B) présente 531 eV ou moins.

5. Catalyseur pour la purification de gaz d'échappement selon la revendication 1, dans lequel le matériau (A) libère le métal noble à une vitesse de 0,1 à 1,0 % en masse par heure par rapport à la quantité totale du métal noble présent dans le matériau (A) à une température de 800°C ou plus.

6. Catalyseur pour la purification de gaz d'échappement selon la revendication 5, dans lequel le matériau (A) est un oxyde composé de métal noble qui contient: au moins un élément sélectionné du groupe constitué de zircone, aluminium, éléments de métal alcalino-terreux, lanthanides et des éléments du groupe 3A; et du métal noble, dans lequel
le métal noble se trouve sous forme de solide dissous dans l'oxyde composé de métal noble.

7. Catalyseur pour la purification de gaz d'échappement selon la revendication 5, dans lequel le matériau (A) est un alliage du métal noble et d'un métal autre que le métal noble.

8. Catalyseur pour la purification de gaz d'échappement selon la revendication 5, dans lequel le métal noble est supporté sur au moins une partie du matériau (B).
